# EUROPÄISCHE PATENTSCHRIFT

(11) **EP 4 073 404 B1**
(45) Veröffentlichungstag und Bekanntmachung des Hinweises auf die Patenterteilung: **07.10.2026**
(21) Anmeldenummer: 20800874.8
(22) Anmeldetag: 02.11.2020
(51) Int. Cl.: F16J 15/34

(54) **GLEITRINGDICHTUNG MIT ÜBERWACHUNGSFUNKTION SOWIE VERFAHREN HIERZU**
END-FACE MECHANICAL SEAL ASSEMBLY WITH MONITORING FUNCTION, AND METHOD FOR SAME
ENSEMBLE JOINT MÉCANIQUE DE FACE D'EXTRÉMITÉ PRÉSENTANT UNE FONCTION DE SURVEILLANCE ET SON PROCÉDÉ

(30) Priorität: 12.12.2019 DE 102019219422
(43) Veröffentlichungstag der Anmeldung: 19.10.2022
(73) Patentinhaber: EagleBurgmann Germany GmbH & Co. KG, 82515 Wolfratshausen (DE)
(72) Erfinder: LANG, Klaus, 82547 Eurasburg (DE); ZAUNER, Thomas, 82049 Pullach (DE)
(74) Vertreter: Hoefer & Partner Patentanwälte mbB
(86) Internationale Anmeldenummer: PCT/EP2020/080661
(87) Internationale Veröffentlichungsnummer: WO 2021/115682

(56) Entgegenhaltungen:
- EP-A1- 0 895 010
- JP-A- S59 117 958
- US-A- 3 917 289
- US-A1- 2007 296 156

## Beschreibung

Die vorliegende Erfindung betrifft eine Gleitringdichtungsanordnung mit einer Überwachungsfunktion durch Schall und/oder Vibration sowie ein Verfahren zur Überwachung einer Gleitringdichtung.

Gleitringdichtungsanordnungen sind aus dem Stand der Technik in unterschiedlichen Ausgestaltungen bekannt. In Betrieb können hierbei beispielsweise Feststoffpartikel zwischen die Gleitflächen von rotierenden und stationären Gleitringen gelangen und Schäden an den Gleitflächen hervorrufen. Dadurch kann eine Dichtheit der Gleitringdichtung vermindert werden, was zu einer erhöhten Leckage führen kann. Diese Leckage kann dann beispielsweise im zurückgeführten Sperrfluid erfasst werden und dann ein Austausch der Gleitringdichtung vorgenommen werden. In der Praxis dauert es dann jedoch eine gewisse Zeit, bis ein derartiger Gleitringdichtungsaustausch vorgenommen werden kann. Dies kann zu einem längeren Stillstand der Maschine führen, in welcher die Gleitringdichtung abdichtet und ist für den Betreiber der Maschine ein großes Ärgernis. Ferner zeigt JP S59 117958 A eine Gleitringdichtungsanordnung gemäß dem Oberbegriff des Anspruchs 1.

Es ist daher Aufgabe der vorliegenden Erfindung, eine Gleitringdichtungsanordnung und ein Verfahren bereitzustellen, welche möglichst schon frühzeitig einen Verschleiß und/oder einen Schaden oder dergleichen an der Gleitringdichtung erkennt und einen frühzeitigen Austausch der Gleitringdichtungsanordnung ermöglicht.

Diese Aufgabe wird durch eine Gleitringdichtungsanordnung sowie ein Verfahren mit den Merkmalen der Ansprüche 1 bzw. 12 gelöst. Die Unteransprüche zeigen jeweils bevorzugte Weiterbildungen der Erfindung.

Die erfindungsgemäße Gleitringdichtungsanordnung mit den Merkmalen des Anspruchs 1 weist demgegenüber den Vorteil auf, dass frühzeitig eine Veränderung an der Gleitringdichtung erkannt werden kann. Dadurch ist es möglich, dass weit vor einem eigentlichen Ausfalltermin der Gleitringdichtungsanordnung eine Entscheidung getroffen werden kann, ob die Gleitringdichtungsanordnung ausgetauscht werden soll oder nicht. Somit kann schon eine entsprechende Gleitringdichtungsanordnung vorbereitet werden und mit kurzer Stillstandszeit der Maschine dann beim Nutzer der Maschine ausgetauscht werden. Dies wird erfindungsgemäß dadurch erreicht, dass die Gleitringdichtungsanordnung eine Gleitringdichtung mit rotierendem und stationärem Gleitring aufweist, welche zwischen sich einen Dichtspalt definieren. Der rotierende Gleitring weist eine erste Gleitfläche mit ersten Informationsstrukturen auf und der stationäre Gleitring weist eine zweite Gleitfläche mit zweiten Informationsstrukturen auf. Die ersten und zweiten Informationsstrukturen sind dabei derart an den beiden Gleitflächen vorgesehen, dass eine zumindest teilweise Überdeckung an einem Überdeckungsbereich vorhanden ist. Eine Überdeckung bedeutet dabei, dass die erste und zweite Informationsstruktur in Radialrichtung zumindest teilweise auf gleicher radialer Höhe angeordnet sind. Vorzugsweise überdecken sich die ersten und zweiten Informationsstrukturen vollständig. Ferner umfasst die Gleitringdichtungsanordnung wenigstens einen Sensor zur Erfassung von Schall und/oder Vibration, wobei der Schall und/oder die Vibration durch das Vorbeibewegen der ersten Informationsstrukturen an den zweiten Informationsstrukturen erzeugt wird. Da sich die Informationsstrukturen an den beiden Gleitflächen zumindest teilweise überdecken, ergeben sich charakteristische Schallgeräusche und/oder Vibrationen, welche mittels des Sensors erfassbar sind. Ferner ist eine Auswerteeinheit vorgesehen, welche eingerichtet ist, die erfassten Schallwellen und/oder die erfassten Vibrationen mit abgespeicherten Soll-Werten zu vergleichen und ein Vergleichsergebnis auszugeben. Somit können gezielt durch das Vorsehen der Informationsstrukturen Wellen und Schwingungen, welche sich bei einem Verschleiß und/oder bei Vorhandensein von Feststoffpartikeln oder Änderung anderer physikalischer Werte wie Druck und/oder Temperatur und/oder Dichte des Mediums im Dichtspalt ändern. Basierend auf der Änderung des erfassten Schalls und/oder der erfassten Vibration wird dann auf einen Zustand der Gleitringdichtungsanordnung geschlossen und gegebenenfalls ein Austausch angeordnet.

Vorzugsweise umfassen die ersten und zweiten Informationsstrukturen definierte Vertiefungen in den Gleitflächen des rotierenden und stationären Gleitrings. Die Vertiefungen auf der Gleitfläche des rotierenden Gleitrings können dabei eine unterschiedliche Tiefe als die Tiefe der Informationsstrukturen auf der Gleitfläche des stationären Gleitrings aufweisen. Auch können einzelne Informationsstrukturen selbst in der Gleitfläche ein unterschiedliches Höhenprofil aufweisen, beispielsweise ein gestuftes Höhenprofil innerhalb der Informationsstruktur oder ein bogenförmiges oder welliges Höhenprofil innerhalb der Vertiefung. Weiter bevorzugt sind mehrere separate Vertiefungen in den Gleitflächen vorgesehen, welche die Informationsstrukturen bilden.

Das Vorsehen der Informationsstrukturen als Vertiefungen ist besonders einfach und kostengünstig durchführbar und ermöglicht eine sichere Erfassung von Änderungen in der Gleitringdichtung. Wenn beispielsweise kleine Feststoffpartikel in dem Dichtspalt zwischen den beiden Gleitflächen des stationären und rotierenden Gleitrings vorhanden sind, setzen sich diese bevorzugt in den als Vertiefungen ausgebildeten Informationsstrukturen fest, wodurch die Schallerzeugung und/oder die Vibrationserzeugung beim aneinander Vorbeigleiten der Gleitflächen geändert wird, was dann mittels des Sensors erfassbar ist. Das Gleiche gilt, wenn sich beispielsweise die Dichte des im Dichtspalt befindlichen Mediums ändert, z. B. durch Leckage eines Produktmediums, welches in den Dichtspalt gelangt.

Die Informationsstrukturen sind besonders bevorzugt als rechteckige Ausnehmungen in die Gleitfläche eingebracht. Die sind sehr einfach und kostengünstig herstellbar und ermöglichen eine sichere Schall- und/oder Vibrationserfassung.

Besonders bevorzugt umfasst die erste Informationsstruktur erste und zweite Substrukturen, die auf der Gleitfläche des rotierenden Gleitrings auf in Radialrichtung des Gleitrings unterschiedlichen Höhen angeordnet sind. Weiter bevorzugt umfasst die zweite Informationsstruktur dritte und vierte Substrukturen, die auf der Gleitfläche des stationären Gleitrings auf in Radialrichtung unterschiedlichen Höhen angeordnet sind. Dabei sind die Substrukturen derart angeordnet, dass sich bei einer Rotation die erste Substruktur an der dritten Substruktur vorbeibewegt und die zweite Substruktur an der dritten Substruktur vorbeibewegt.

Zur möglichst genauen Erfassung der Schwingungen und/oder Vibrationen ist der Sensor vorzugsweise direkt an einem der Gleitringe, insbesondere am stationären Gleitring oder einem stationären Bauteil, angeordnet. Weiter bevorzugt ist der Sensor direkt an einer Rückseite eines der Gleitringe, insbesondere der Rückseite des stationären Gleitrings, angeordnet.

Damit die Informationsstruktur nicht die Gleitfläche und damit die Abdichtungsfähigkeit der Gleitringdichtung groß stören, sind die Informationsstrukturen bevorzugt in Nuten, welche in der Gleitfläche vorgesehen sind, angeordnet. Die Nuten sind beispielsweise Spiralnuten, welche dazu dienen, bei einem Start der Maschine ein möglichst schnelles Abheben der Gleitringe voneinander zu ermöglichen. Alternativ sind die Informationsstrukturen benachbart zu Nuten in der Gleitfläche angeordnet.

Gemäß einer besonders bevorzugten Ausgestaltung der Erfindung sind die Informationsstrukturen auf den Gleitflächen des rotierenden und stationären Gleitrings derart angeordnet, dass bei einem aneinander Vorbeibewegen der Informationsstrukturen ein charakteristisches Signal oder eine Melodie erzeugt wird. Somit kann z.B. eine singende Gleitringdichtung bereitgestellt werden und Änderungen der Gleitringe bzw. der Gleitflächen durch Änderung des charakteristischen Signals oder der Melodie sicher erkannt werden.

Eine besonders schnelle und einfache Auswertemöglichkeit ist gegeben, wenn die Auswerteeinheit vorzugsweise eingerichtet ist, ein Amplitudenverhältnis mehrerer Amplituden, die durch eine Informationsstruktur erzeugt werden, zu bestimmen. Dadurch wird eine schnelle Auswertung der erfassten Schallsignale und/oder Vibrationssignale möglich.

Vorzugsweise ist der Sensor zur Erfassung von Schall und/oder Vibration ein Körperschallsensor oder ein Beschleunigungssensor. Der Körperschallsensor ist vorzugsweise am Gehäuse oder einem feststehenden Bauteil angeordnet.

Ferner betrifft die vorliegende Erfindung ein Verfahren zur Überwachung einer Gleitringdichtung mit einem rotierenden und einem stationären Gleitring, wobei an jeder Gleitfläche der Gleitringe wenigstens eine Informationsstruktur vorhanden sind. Das Verfahren umfasst dabei die Schritte, des im Betrieb Aufnehmens von Schallsignalen und/oder Vibrationssignalen, welche durch das aneinander Vorbeibewegen der Informationsstrukturen erzeugt werden und des Vergleichens der aufgenommenen Schallsignale und/oder Vibrationssignale mit gespeicherten Schallsignalen und/oder Vibrationssignalen, um Abweichungen festzustellen.

Vorzugsweise wird von den erfassten Schallsignalen und/oder Vibrationssignalen auf den Zustand der Gleitringdichtung geschlossen.

Weiter bevorzugt wird bei Feststellung einer vorbestimmten Abweichung der Schallsignale und/oder der Vibrationssignale von gespeicherten Schallsignalen und/oder Vibrationssignalen eine Wartungsmeldung ausgegeben. Die Meldung kann beispielsweise direkt zu einem Hersteller der Gleitringdichtungsanordnung oder einem mit der Wartung betreuten Unternehmen gesendet werden, sodass dort sofort mit Maßnahmen für einen möglichen Ersatz der Gleitringdichtungsanordnung begonnen werden kann.

Um möglichst eine hohe Genauigkeit der erfassten Signale zu erreichen, wird der Schall und/oder die Vibration vorzugsweise direkt an einem der Gleitringe, insbesondere dem stationären Gleitring oder einem Gleitringträger, erfasst.

Nachfolgend werden bevorzugte Ausführungsbeispiele der Erfindung unter Bezugnahme auf die begleitende Zeichnung im Detail beschrieben. In der Zeichnung ist:
- Fig. 1: eine schematische Darstellung einer Gleitringdichtungsanordnung gemäß einem ersten Ausführungsbeispiel der Erfindung,
- Fig. 2: eine schematische teilweise Draufsicht auf eine Gleitfläche eines rotierenden Gleitrings von Figur 1,
- Fig. 3: eine schematische, teilweise Draufsicht auf eine Gleitfläche eines stationären Gleitrings von Figur 1,
- Fig. 4: ein Diagramm, welches einen durch die Informationsstrukturen an den Gleitringen von Figur 2 und 3 erzeugten Schalldruck über der Zeit zeigt,
- Fig. 5: eine schematische, teilweise Draufsicht einer Gleitfläche eines rotierenden Gleitrings gemäß einem zweiten Ausführungsbeispiel der Erfindung,
- Fig. 6: eine schematische, teilweise Draufsicht einer Gleitfläche eines stationären Gleitrings gemäß dem zweiten Ausführungsbeispiel der Erfindung,
- Fig. 7: eine schematische Draufsicht einer Gleitfläche eines rotierenden Gleitrings gemäß einem dritten Ausführungsbeispiel der Erfindung,
- Fig. 8: eine schematische Schnittansicht entlang der Linie VIII-VIII von Figur 7, und
- Fig. 9: eine schematische Draufsicht einer Gleitfläche eines rotierenden Gleitrings gemäß einem vierten Ausführungsbeispiel der Erfindung.

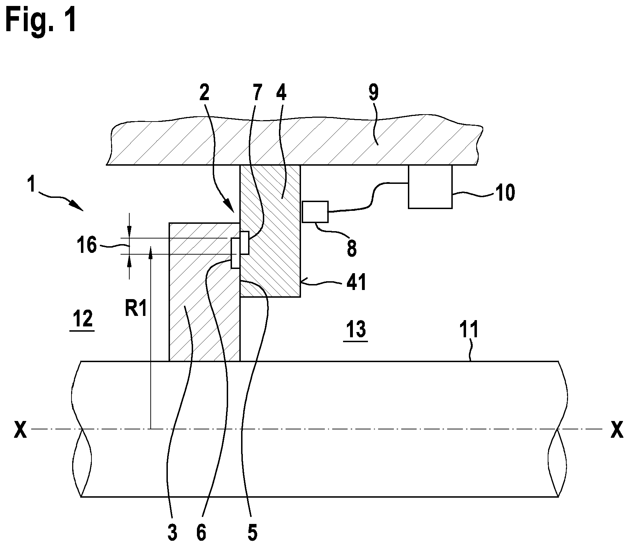

Nachfolgend wird unter Bezugnahme auf die Figuren 1 bis 4 eine Gleitringdichtungsanordnung 1 gemäße einem ersten bevorzugten Ausführungsbeispiel der Erfindung im Detail beschrieben.

Wie aus Figur 1 ersichtlich ist, umfasst die Gleitringdichtungsanordnung 1 eine Gleitringdichtung 2 mit einer Mittelachse X-X, einem rotierenden Gleitring 3 und einem stationären Gleitring 4. Zwischen dem rotierenden Gleitring 3 und dem stationären Gleitring 4 ist ein Dichtspalt 5 definiert.

Die Gleitringdichtung 2 dichtet einen Produktbereich 12 von einem Atmosphärenbereich 13 ab.

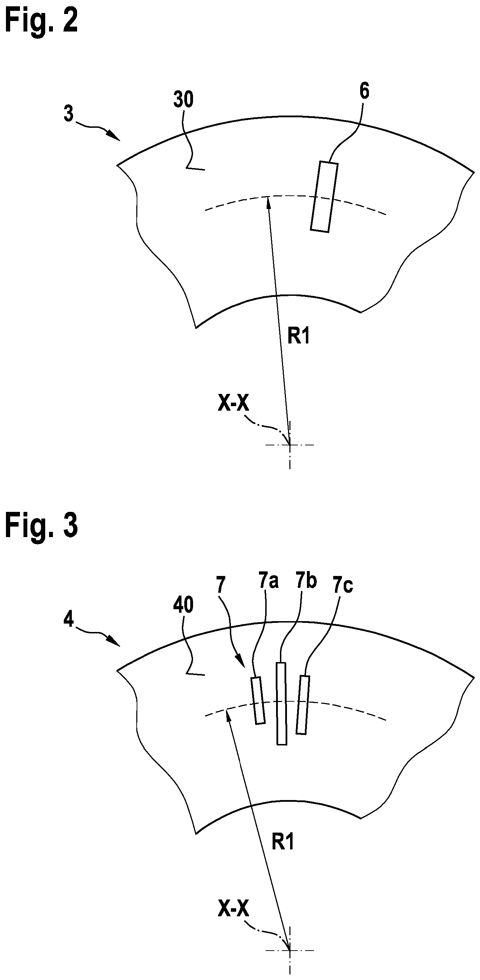

Die Figuren 2 und 3 zeigen jeweils eine Gleitfläche des rotierenden bzw. stationären Gleitrings 3, 4. Wie aus Figur 2 ersichtlich ist, ist auf einer Gleitfläche 30 des rotierenden Gleitrings 3 eine erste Informationsstruktur 6 vorgesehen. Auf einer Gleitfläche 40 des stationären Gleitrings 4 ist eine zweite Informationsstruktur 7 vorgesehen. In diesem Ausführungsbeispiel bilden drei einzelne Informationsstrukturen 7a, 7b, 7c die zweite Informationsstruktur 7.

Wie aus den Figuren 2 und 3 weiter ersichtlich ist, sind die Informationsstrukturen 6, 7 auf den Gleitflächen 30, 40 teilweise auf gleicher radialer Höhe angeordnet.

Wie im Detail aus Figur 1 ersichtlich ist, ergibt sich bei den Informationsstrukturen 6, 7 dabei in radialer Richtung ein Überdeckungsbereich 16, dessen Mitte auf dem Radius R1 liegt. Dadurch wird sichergestellt, dass im Betrieb, wenn sich der rotierende Gleitring 3 mit einer Welle 11 dreht, die Informationsstrukturen während des Drehvorgangs aneinander vorbeibewegt werden.

Wie weiter aus Figur 1 ersichtlich ist, sind die Informationsstrukturen 6, 7 dieses Ausführungsbeispiels rechteckige Ausnehmungen auf der Gleitfläche. Die Ausnehmungen sind dabei vorzugsweise circa ein bis zwei µm tief. Die als Ausnehmungen vorgesehenen Informationsstrukturen können dabei eine gleiche Breite aufweisen oder auch unterschiedliche Breiten. Wie weiter aus Figur 3 ersichtlich ist, können die Informationsstrukturen auch unterschiedliche Längen in Radialrichtung aufweisen.

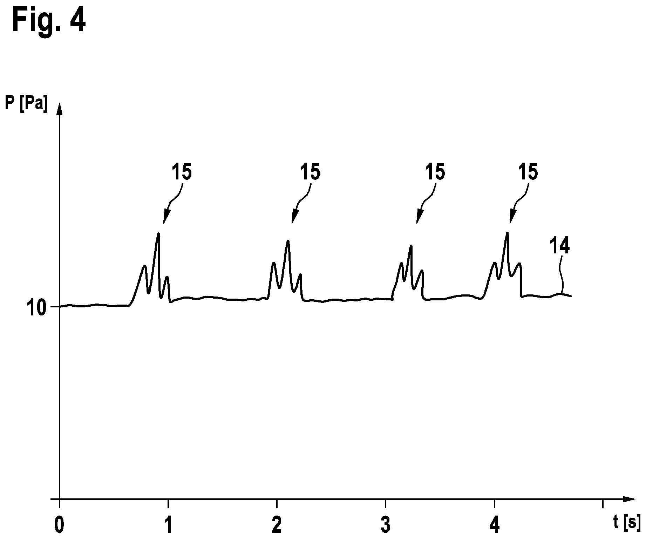

Wenn die am rotierenden Gleitring 3 vorgesehenen ersten Informationsstrukturen 6 im Betrieb an der drei einzelne Informationsstrukturen umfassenden zweiten Informationsstruktur 7 vorbeigleiten, ergibt sich ein charakteristisches Schallsignal. Dieses ist im Diagramm von Figur 4 gezeigt.

Figur 4 zeigt als Schalldruckkurve 14 den Schalldruck P in Pascal über der Zeit t in Sekunden s. Wie aus dem Diagramm entnehmbar ist, ergeben sich charakteristische Amplituden 15. Da die zweite Informationsstruktur 7 drei unterschiedliche einzelne Informationsstrukturen 71, 72, 73 aufweist, ergeben sich unterschiedliche Höhen der Amplitude 15.

Wie in Figur 1 gezeigt, ist an einer Rückseite 41 des stationären Gleitrings 4 unmittelbar ein Sensor 8 angeordnet. Der Sensor 8 erfasst dabei Schall und/oder Vibration, welche durch das aneinander Vorbeigleiten der ersten und zweiten Informationsstrukturen 6, 7 erzeugt wird. Der Sensor 8 ist mit einer Auswerteeinheit 10, welche gemeinsam mit dem stationären Gleitring 4 an einem Gehäuse 9 angeordnet ist, verbunden.

Die Auswerteeinheit 10 ist dabei eingerichtet, die erfassten Schallsignale und/oder die erfassten Vibrationssignale mit gespeicherten Soll-Werten zu vergleichen und ein Vergleichsergebnis auszugeben. Sollte sich aus dem Vergleich ergeben, dass eine zu große Abweichung zwischen den Soll-Werten und den Ist-Werten vorhanden ist, kann der Hersteller der Gleitringdichtung oder ein mit der Wartung beauftragtes Unternehmen sofort reagieren.

Somit kann eine Überwachung der Gleitringdichtungsanordnung 1 ermöglicht werden, um möglichst frühzeitig eine Gefahr eines Ausfalls zu erkennen und entsprechende Gegenmaßnahmen zu treffen, beispielsweise ein Austausch der Gleitringdichtungsanordnung. Dabei kann die Überwachung sehr kostengünstig und einfach aufgebaut sein. Insbesondere kann eine mittlere Spalthöhe, d. h. ein senkrechter Abstand zwischen den Gleitflächen der Gleitringe 3, 4 in Richtung der Mittelachse X-X auf einfache Weise ermittelt werden. Dadurch kann auch bei Überwachung der Gleitringdichtung über die Betriebszeit festgestellt werden, ob sich der Dichtspalt 5 verändert, insbesondere als sogenannter A-Spalt, d. h. der Dichtspalt 5 öffnet sich radial nach innen, oder als sogenannter V-Spalt, d. h. der Dichtspalt öffnet sich radial nach außen.

Weiterhin kann eine Überwachung basierend auf Amplitudenverhältnissen durchgeführt werden, sodass eine absolute Kalibrierung eines Signallevels entfallen kann. Auch können die durch die Informationsstrukturen 6, 7 erzeugten Signale einfach von möglichen anderen, vorhandenen Signalen aus anderen Quellen unterschieden werden.

Es sei ferner angemerkt, dass der Sensor zur Erfassung von Signalen der Informationsstrukturen, z.B. ein Körperschallsensor, auch bereits an der abzudichtenden Maschine vorhanden sein kann und mit der Auswerteeinheit 10 verbunden werden kann. Es ist auch möglich, eine Nachrüstung von bestehenden Gleitringdichtungsanordnungen durch Einbau von Gleitringen mit Informationsstrukturen zu ermöglichen.

Es sei ferner angemerkt, dass die ersten und zweiten Informationsstrukturen 6, 7 auch derart ausgelegt werden können, dass ein tatsächlich für ein menschliches Gehör hörbares Geräusch entsteht. Hierbei wäre es auch denkbar, gewisse Melodien durch die Informationsstrukturen zu erzeugen, sodass Änderungen auf diese Weise auch durch das menschliche Gehör einfach erfassbar sind.

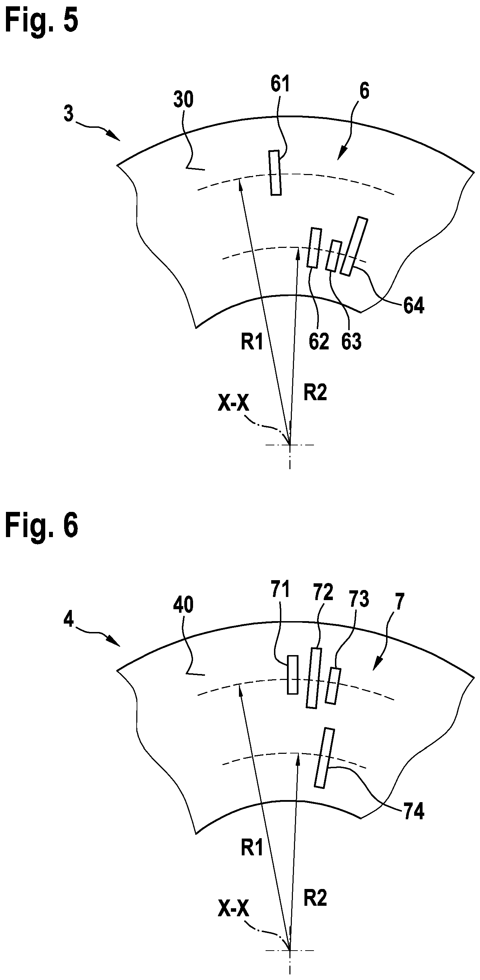

Die Figuren 5 und 6 zeigen eine Gleitringdichtungsanordnung 1 gemäß einem zweiten Ausführungsbeispiel der Erfindung. Wie aus den Figuren 5 und 6 ersichtlich ist, weist die erste Informationsstruktur 6, welche am rotierenden Gleitring 3 angeordnet ist, eine erste Substruktur 61 und drei zweite Substrukturen 62, 63, 64 auf. Wie weiter aus Figur 6 ersichtlich ist, weist der stationäre Gleitring 4 eine zweite Informationsstruktur 7 umfassend drei dritte Substrukturen 71, 72, 73 und eine vierte Substruktur 74.

Wie aus den Figuren 5 und 6 ersichtlich ist, sind dabei Bereiche der ersten Substruktur 61 und der dritten Substrukturen 71, 72, 73 auf dem gleichen ersten Radius R1 angeordnet. Bereiche der zweiten Substrukturen 62, 63, 64 und die vierte Substruktur 74 sind auf dem gleichen zweiten Radius R2 angeordnet. Der zweite Radius R2 ist deutlich kleiner als der erste Radius R1. Somit können durch die auf dem ersten Radius R1 angeordneten Substrukturen ein erstes Schallsignal und/oder ein erstes Vibrationssignal erzeugt werden und durch die auf dem zweiten Radius R2 angeordneten Substrukturen ein zweites Schallsignal und/oder Vibrationssignal erzeugt werden. Dadurch kann eine Genauigkeit einer Überwachung deutlich verbessert werden und insbesondere eine Spalthöhe des Dichtspalts 5 sicher erfasst werden.

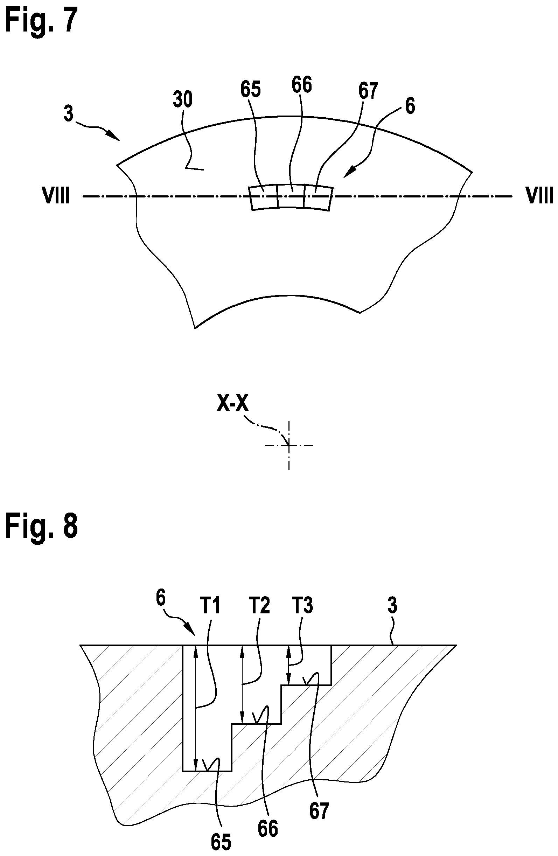

Die Figuren 7 und 8 zeigen eine Gleitringdichtungsanordnung gemäß einem dritten Ausführungsbeispiel der Erfindung. Wie aus Figur 7 ersichtlich ist, ist am rotierenden Gleitring 3 beim dritten Ausführungsbeispiel eine erste Informationsstruktur 6 mit drei Substrukturen 65, 66, 67 dargestellt. Wie aus der Schnittdarstellung von Figur 8 ersichtlich ist, weisen die drei Substrukturen 65, 66, 67 dabei jeweils unterschiedliche Tiefen T1, T2 und T3 auf.

Somit sind in diesem Ausführungsbeispiel drei Substrukturen in einer als Vertiefung ausgebildete erste Informationsstruktur 6 integriert. Wie Figur 8 zeigt, sind die Tiefen der Substrukturen stufenförmig unterschiedlich. Die nicht gezeigte zweite Informationsstruktur am stationären Gleitring kann dann in gleicher Weise wie am rotierten Gleitring 3 ausgebildet sein oder auch wie in den vorhergehenden Ausführungsbeispielen durch mehrere, separate Vertiefungen in der Gleitfläche des stationären Gleitrings ausgebildet sein.

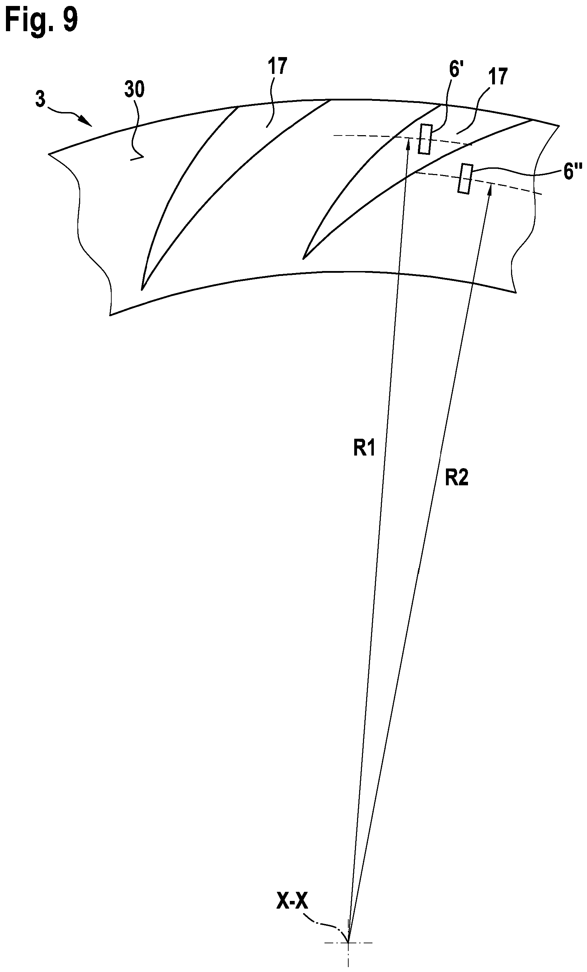

Figur 9 zeigt eine Gleitringdichtungsanordnung gemäß einem vierten Ausführungsbeispiel der Erfindung. Beim vierten Ausführungsbeispiel sind in der Gleitfläche mehrere Nuten 17 vorgesehen. Die Nuten 17 weisen nur eine geringe Tiefe von wenigen µm auf. Dabei ist eine erste Informationsstruktur 6' in der Nut 17 angeordnet und eine weitere erste Informationsstruktur 6" außerhalb der Nut 17 in der Gleitfläche 30 des rotierenden Gleitrings vorgesehen. Die Informationsstrukturen 6', 6" sind wieder auf unterschiedlichen Radien R1, R2 ausgebildet um insbesondere eine Spalthöhe des Dichtspalts sicher zu erfassen.

Ansonsten entspricht dieses Ausführungsbeispiel den vorherigen Ausführungsbeispielen, sodass auf die dort gegebene Beschreibung verwiesen werden kann.

Allgemein sei zu allen Ausführungsbeispielen angemerkt, dass beliebige Kombinationen der Ausgestaltungen der ersten und zweiten Informationsstrukturen 6, 7 möglich sind. Auch können die als Vertiefungen ausgebildeten ersten und zweiten Informationsstrukturen 6, 7 beliebige geometrische Gestalt annehmen. Beispielsweise können auch Vertiefungen mit sich kontinuierlich änderndem Höhenprofil als Informationsstrukturen 6, 7 vorgesehen werden. Weiter alternativ können neben rechteckigen Informationsstrukturen auch quadratische Informationsstrukturen oder kreisförmige oder ovale Informationsstrukturen oder dreieckförmige Informationsstrukturen vorgesehen werden.

### Bezugszeichenliste

- 1: Gleitringdichtungsanordnung
- 2: Gleitringdichtung
- 3: rotierender Gleitring
- 4: stationärer Gleitring
- 5: Dichtspalt
- 6, 6', 6": erste Informationsstruktur
- 7: zweite Informationsstruktur
- 7a, 7b, 7c: einzelne Informationsstruktur
- 8: Sensor
- 9: Gehäuse
- 10: Auswerteeinheit
- 11: Welle
- 12: Produktbereich
- 13: Atmosphärenbereich
- 14: Schalldruckkurve
- 15: Amplitude
- 16: Überdeckungsbereich
- 17: Nut
- 30: Gleitfläche des rotierenden Gleitrings
- 40: Gleitfläche des stationären Gleitrings
- 41: Rückseite des stationären Gleitrings
- 61: erste Substruktur
- 62, 63, 64: zweite Substruktur
- 65, 66, 67: Substrukturen mit unterschiedlicher Tiefe
- 71, 72, 73: dritte Substruktur
- 74: vierte Substruktur
- R1: erster Radius
- R2: zweiter Radius
- T1: erste Tiefe
- T2: zweite Tiefe
- T3: dritte Tiefe
- X-X: Axialrichtung/Mittelachse der Gleitringdichtung

## Patentansprüche

1. Gleitringdichtungsanordnung, umfassend
• eine Gleitringdichtung (2) mit einem rotierenden Gleitring (3) und einem stationären Gleitring (4), welche zwischen sich einen Dichtspalt (5) definieren,
• wobei der rotierende Gleitring (3) eine erste Gleitfläche (30) mit einer ersten Informationsstruktur (6) aufweist,
• wobei der stationäre Gleitring (4) eine zweite Gleitfläche (40) mit einer zweiten Informationsstruktur (7) aufweist,
• wobei sich die erste Informationsstruktur (6) und die zweite Informationsstruktur (7) an einem Überdeckungsbereich (16) zumindest teilweise überdecken, **dadurch gekennzeichnet, dass**
• wenigstens einen Sensor (8) zur Erfassung von Schall und/oder Vibration, wobei der Schall und/oder die Vibration durch das aneinander Vorbeibewegen der ersten Informationsstruktur (6) an der zweiten Informationsstruktur (7) erzeugt wird, und
• eine Auswerteeinheit (10), welche eingerichtet ist, den erfassten Schall und/oder die erfassten Vibrationen mit Soll-Werten zu vergleichen und ein Vergleichsergebnis auszugeben wobei basierend auf einer Änderung des erfassten Schalls und/oder der erfassten Vibration auf einen Verschleißzustand der Gleitringdichtungsanordnung geschlossen wird und gegebenenfalls ein Austausch angeordnet wird.

2. Gleitringdichtungsanordnung nach Anspruch 1, wobei die erste Informationsstruktur (6) und die zweite Informationsstruktur (7) definierte Vertiefungen in den Gleitflächen (30, 40) umfassen.

3. Gleitringdichtungsanordnung nach Anspruch 2, wobei die Vertiefungen rechteckige Ausnehmungen oder dergleichen sind.

4. Gleitringdichtungsanordnung nach einem der vorhergehenden Ansprüche, wobei die erste Informationsstruktur (6) eine erste Substruktur (61) und eine zweite Substruktur (62, 63, 64) aufweist, wobei die erste und zweite Substruktur auf der Gleitfläche des rotierenden Gleitrings (3) auf in Radialrichtung unterschiedlichen Höhen angeordnet sind, und die zweite Informationsstruktur (7) eine dritte Substruktur (71 72, 73) und eine vierte Substruktur (74) aufweist, wobei die dritten und vierten Substrukturen auf der Gleitfläche des stationären Gleitrings (4) auf in Radialrichtung unterschiedliche Höhen angeordnet sind, derart, dass die erste Substruktur und die dritte Substruktur auf einem ersten Radius R1 einen Überdeckungsbereich (16) aufweisen und die zweite Substruktur und die vierte Substruktur auf einem zweiten Radius R2 einen Überdeckungsbereich (16) aufweisen.

5. Gleitringdichtungsanordnung nach einem der vorhergehenden Ansprüche, wobei der Sensor (8) direkt an einem der Gleitringe angeordnet ist.

6. Gleitringdichtungsanordnung nach Anspruch 5, wobei der Sensor (8) direkt an einer Rückseite (41) des stationären Gleitrings (4) oder an einem Gleitringträger angeordnet ist.

7. Gleitringdichtungsanordnung nach einem der vorhergehenden Ansprüche, wobei wenigstens eine Gleitfläche (30, 40) Nuten (17) aufweist, welche in der Gleitfläche vorgesehen sind, wobei die ersten Informationsstrukturen und/oder die zweiten Informationsstrukturen in der Nut (17) angeordnet sind.

8. Gleitringdichtungsanordnung nach einem der vorhergehenden Ansprüche, wobei im Betrieb durch das aneinander Vorbeibewegen der ersten Informationsstruktur (6) an der zweiten Informationsstruktur (7) ein charakteristisches Signal oder eine Melodie erzeugt wird.

9. Gleitringdichtungsanordnung nach einem der vorhergehenden Ansprüche, wobei die Auswerteeinheit (10) eingerichtet ist, ein Amplitudenverhältnis mehrerer durch eine Informationsstruktur (6, 7) erzeugten Amplituden zu bestimmen.

10. Gleitringdichtungsanordnung nach einem der vorhergehenden Ansprüche, wobei der Sensor (8) ein Körperschallsensor oder ein Beschleunigungssensor ist.

11. Gleitringdichtungsanordnung nach einem der Ansprüche 1 bis 9, wobei der Sensor ein Körperschallsensor ist, der am Gehäuse oder am feststehenden Bauteil angeordnet ist.

12. Verfahren zur Überwachung einer Gleitringdichtung (2) mit einem rotierenden Gleitring (3) und einem stationären Gleitring (4), wobei auf jeder der Gleitflächen (30 ,40) der Gleitringe wenigstens eine Informationsstruktur (6, 7) vorhanden ist, wobei
• im Betrieb Schallsignale und/oder Vibrationssignale durch das aneinander Vorbeibewegen der ersten Informationsstruktur (6) an der zweiten Informationsstruktur (7) erzeugt werden und die erzeugten Schallsignale und/oder Vibrationssignale mit gespeicherten Schallsignalen und/oder Vibrationssignalen in einer Auswerteeinheit (10) verglichen werden, wobei basierend auf einer Änderung des erfassten Schalls und/oder der erfassten Vibration auf einen Verschleißzustand der Gleitringdichtungsanordnung geschlossen wird und gegebenenfalls ein Austausch angeordnet wird.

13. Verfahren nach Anspruch 12, wobei basierend auf den erfassten Schallsignalen und/oder den erfassten Vibrationssignalen auf den Zustand der Gleitringdichtung geschlossen wird.

14. Verfahren nach Anspruch 12 oder 13, wobei bei einer vorbestimmten Abweichung der erfassten Schallsignale und/oder der erfassten Vibrationssignale von den gespeicherten Schallsignalen und/oder den gespeicherten Vibrationssignalen eine Meldung ausgegeben wird.

15. Verfahren nach einem der Ansprüche 12 bis 14, wobei die Schallsignale und/oder die Vibrationssignale direkt an einen Gleitring oder einem Gleitringträger, insbesondere dem stationären Gleitring, erfasst werden.

## Claims

1. A mechanical seal arrangement comprising:
• a mechanical seal (2) comprising a rotating slide ring (3) and a stationary slide ring (4) defining a sealing gap (5) therebetween,
• wherein the rotating slide ring (3) comprises a first sliding surface (30) having a first information structure (6)
• wherein the stationary slide ring (4) comprises a second sliding surface (40) having a second information structure (7),
• wherein the first information structure (6) and the second information structure (7) at least partially overlap in an overlap area (16),
**characterized in that**
• at least one sensor (8) for detecting sound and/or vibration, the sound and/or vibration being generated by the first information structure (6) when moving past the second information structure (7), and
• an evaluation unit (10), which is arranged to compare the sound and/or the vibrations detected with set values and to output a comparison result, wherein based on a change of the detected sound and/or vibration it is inferred about the wearing condition of the mechanical seal and if necessary an exchange thereof is arranged.

2. The mechanical seal arrangement according to claim 1, wherein the first information structure (6) and the second information structure (7) comprise defined recesses in the sliding surfaces (30, 40).

3. The mechanical seal arrangement according to claim 2, wherein the recesses are rectangular recesses or the like.

4. The mechanical seal arrangement according to one of the preceding claims, wherein the first information structure (6) comprises a first substructure (61) and a second substructure (62, 63, 64), the first and second substructures being arranged on the sliding surface of the rotating slide ring (3) at different heights in the radial direction, and the second information structure (7) comprises a third substructure (71 72, 73) and a fourth substructure (74), the third and fourth substructures being arranged on the sliding surface of the stationary slide ring (4) at radially different heights, such that the first substructure and the third substructure have an overlap area (16) on a first radius R1 and the second substructure and the fourth substructure have an overlap area (16) on a second radius R2.

5. The mechanical seal arrangement according to one of the preceding claims, wherein the sensor (8) is arranged directly on one of the slide rings.

6. The mechanical seal arrangement according to claim 5, wherein the sensor (8) is arranged directly on a rear side (41) of the stationary slide ring (4) or on a slide ring carrier.

7. The mechanical seal arrangement according to one of the preceding claims, wherein at least one sliding surface (30, 40) comprises grooves (17) provided in the sliding surface, wherein the first information structures and/or the second information structures are arranged in the groove (17).

8. The mechanical seal arrangement according to one of the preceding claims, wherein, during operation, a characteristic signal or melody is generated by the first information structure (6) when moving past the second information structure (7).

9. The mechanical seal arrangement according to one of the preceding claims, wherein the evaluation unit (10) is arranged to determine an amplitude ratio of a plurality of amplitudes generated by an information structure (6, 7).

10. The mechanical seal arrangement according to one of the preceding claims, wherein the sensor (8) is a structure-borne sound sensor or an acceleration sensor.

11. The mechanical seal arrangement according to one of claims 1 to 9, wherein the sensor is a structure-borne sound sensor arranged on the housing or on the stationary component.

12. A method of monitoring a mechanical seal (2) having a rotating slide ring (3) and a stationary slide ring (4), at least one information structure (6, 7) being provided on each of the sliding surfaces (30, 40) of the slide rings, in which method
• during operation, sound signals and/or vibration signals are generated by the first information structure (6) when moving past the second information structure (7), and the generated sound signals and/or vibration signals are compared with sound signals and/or vibration signals stored in an evaluation unit (10), wherein based on a change of the detected sound and/or vibration it is inferred about the wearing condition of the mechanical seal and if necessary an exchange thereof is arranged.

13. The method according to claim 12, wherein the state of the mechanical seal is deduced based on the sound signals and/or the vibration signals detected.

14. The method according to claims 12 or 13, wherein a message is output in the event of any predetermined deviation of the sound signals and/or the vibration signals detected from the sound signals and/or the vibration signals stored.

15. The method according to one of the claims 12 to 14, wherein the sound signals and/or the vibration signals are detected directly at a slide ring or a slide ring carrier, especially the stationary slide ring.

## Revendications

1. Ensemble à garniture mécanique d'étanchéité, comprenant :
- une garniture mécanique d'étanchéité (2) avec un anneau de glissement rotatif (3) et un anneau de glissement fixe (4), lesquels définissent entre eux une fente d'étanchéité (5),
• dans lequel l'anneau de glissement rotatif (3) présente une première surface de glissement (30) avec une première structure d'information (6),
• dans lequel l'anneau de glissement fixe (4) présente une deuxième surface de glissement (40) avec une deuxième structure d'information (7),
• dans lequel la première structure d'information (6) et la deuxième structure d'information (7) se chevauchent au moins en partie sur une zone de recouvrement (16), **caractérisé par**
• au moins un capteur (8) de détection de son et/ou de vibration, dans lequel le son et/ou la vibration sont générés par le passage l'une le long de l'autre de la première structure d'information (6) sur la deuxième structure d'information (7), et
• une unité d'évaluation (10) qui est mise au point pour comparer le son détecté et/ou les vibrations détectées à des valeurs de consigne et délivrer un résultat de comparaison, dans lequel, sur la base d'une modification du son détecté et/ou des vibrations détectées, un état d'usure de l'ensemble à garniture mécanique d'étanchéité est déduit et, le cas échéant, un remplacement est ordonné.

2. Ensemble à garniture mécanique d'étanchéité selon la revendication 1, dans lequel la première structure d'information (6) et la deuxième structure d'information (7) comprennent des creux définis dans les surfaces de glissement (30, 40).

3. Ensemble à garniture mécanique d'étanchéité selon la revendication 2, dans lequel les creux sont des évidements rectangulaires ou similaires.

4. Ensemble à garniture mécanique d'étanchéité selon l'une quelconque des revendications précédentes, dans lequel la première structure d'information (6) présente une première sous-structure (61) et une deuxième sous-structure (62, 63, 64), dans lequel la première et la deuxième sous-structure sont disposées sur la surface de glissement de l'anneau de glissement rotatif (3) à des hauteurs différentes dans le sens radial, et la deuxième structure d'information (7) présente une troisième sous-structure (71, 72, 73) et une quatrième sous-structure (74), dans lequel la troisième et la quatrième sous-structure sont disposées sur la surface de glissement de l'anneau de glissement fixe (4) à des hauteurs différentes dans le sens radial, de telle manière que la première sous-structure et la troisième sous-structure présentent une zone de recouvrement (16) sur un premier rayon R1 et la deuxième sous-structure et la quatrième sous-structure présentent une zone de recouvrement (16) sur un deuxième rayon R2.

5. Ensemble à garniture mécanique d'étanchéité selon l'une quelconque des revendications précédentes, dans lequel le capteur (8) est disposé directement sur un des anneaux de glissement.

6. Ensemble à garniture mécanique d'étanchéité selon la revendication 5, dans lequel le capteur (8) est disposé directement sur une face arrière (41) de l'anneau de glissement fixe (4) ou sur un support d'anneau de glissement.

7. Ensemble à garniture mécanique d'étanchéité selon l'une quelconque des revendications précédentes, dans lequel au moins une surface de glissement (30, 40) présente des rainures (17) qui sont prévues dans la surface de glissement, dans lequel les premières structures d'information et/ou les deuxièmes structures d'information sont disposées dans la rainure (17).

8. Ensemble à garniture mécanique d'étanchéité selon l'une quelconque des revendications précédentes, dans lequel un signal caractéristique ou une mélodie est généré/générée en fonctionnement par le passage de la première structure d'information (6) le long de la deuxième structure d'information (7).

9. Ensemble à garniture mécanique d'étanchéité selon l'une quelconque des revendications précédentes, dans lequel l'unité d'évaluation (10) est mise au point pour déterminer un rapport d'amplitude de plusieurs amplitudes générées par une structure d'information (6, 7).

10. Ensemble à garniture mécanique d'étanchéité selon l'une quelconque des revendications précédentes, dans lequel le capteur (8) est un capteur de bruit de structure ou un capteur d'accélération.

11. Ensemble à garniture mécanique d'étanchéité selon l'une quelconque des revendications 1 à 9, dans lequel le capteur est un capteur de bruit de structure, qui est disposé sur le boîtier ou sur le composant immobile.

12. Procédé de surveillance d'une garniture mécanique d'étanchéité (2) avec une bague de glissement rotative (3) et une bague de glissement fixe (4), dans lequel au moins une structure d'information (6, 7) est présente sur chacune des surfaces de glissement (30, 40) des bagues de glissement, dans lequel
• des signaux sonores et/ou vibratoires sont générés en fonctionnement par le passage de la première structure d'information (6) le long de la deuxième structure d'information (7) et les signaux sonores et/ou vibratoires générés sont comparés à des signaux sonores et/ou vibratoires enregistrés dans une unité d'évaluation (10), dans lequel, sur la base d'une modification du bruit détecté et/ou de la vibration détectée, un état d'usure de l'ensemble à garniture mécanique d'étanchéité est déduit et, le cas échéant, un remplacement est ordonné.

13. Procédé selon la revendication 12, dans lequel l'état de la garniture mécanique d'étanchéité est déduit sur la base des signaux sonores détectés et/ou des signaux vibratoires détectés.

14. Procédé selon la revendication 12 ou 13, dans lequel un message est délivré en cas d'écart prédéterminé des signaux sonores détectés et/ou des signaux vibratoires détectés par rapport aux signaux sonores enregistrés et/ou aux signaux vibratoires enregistrés.

15. Procédé selon l'une quelconque des revendications 12 à 14, dans lequel les signaux sonores et/ou les signaux vibratoires sont détectés directement sur une bague de glissement ou un support de bague de glissement, en particulier la bague de glissement fixe.
